# EUROPEAN PATENT SPECIFICATION

(11) **EP 3 647 164 B1**
(45) Date of publication and mention of the grant of the patent: **26.05.2021**
(21) Application number: 18203691.3
(22) Date of filing: 31.10.2018
(51) Int. Cl.: B62D 21/20

(54) **A LOAD BEARING FRAME ASSEMBLY FOR A VEHICLE**
LASTTRAGENDE RAHMENANORDNUNG FÜR EIN FAHRZEUG
ENSEMBLE CADRE DE SUPPORT DE CHARGE POUR VÉHICULE

(43) Date of publication of application: 06.05.2020
(73) Proprietor: SSAB Technology AB, 101 21 Stockholm (SE)
(72) Inventor: Isaksson, Anders, 791 92 Falun (SE)
(74) Representative: Valea AB

(56) References cited:
- EP-A2- 1 997 717
- EP-B1- 3 052 371
- WO-A1-2014/084777
- DE-A1-102006 009 858
- US-A- 5 114 183

## Description

### TECHNICAL FIELD

The present disclosure relates to a load-bearing frame assembly for a vehicle, comprising a first and a second frame configured to receive and support material to be transported, the first and the second frame being successively arranged in a longitudinal extension of the frame assembly and mechanically coupled to each other at a connecting area.

### BACKGROUND

A vehicle, such as a trailer for a truck, generally comprises a frame assembly. The frame assembly is constructed by a number of steel beams which are joined together. The beams, commonly I-shaped or H-shaped steel beams, may for example be welded together to form the frame assembly.

In the prior art it has been suggested to provide modular frame assemblies, which are made of two or more connected sub-frames. Such modular designs have shown to have several advantages; in particular the modularity is advantageous for manufacturing reasons. However, when using modular frame assemblies, it is of utmost importance that sufficient strength and stiffness is provided, especially at the connection area where the sub-frames are connected. This is especially important when the frame assembly is used in a trailer for a heavy-duty truck combination, where high loads can be expected.

There are a few known examples of modular frame assemblies. For example, EP1997717 discloses a frame for a trailer in which a sub-base consists of forward and rear beams which are joined together by bolts. As another example, WO2014084777 discloses a frame configuration for a trailer comprising a forward part and a rear part, where the two parts are united by a connection part. The connection part is arranged between the forward and rear parts and includes a forward interface for connection with the forward part and a rearward interface for connection with the rear part. The first connection part includes a transition between the forward and rear parts from a first height at the forward part to a second height at the rear part.

Hence, it is also known to provide split frame assemblies, where the separate sub-frames have different heights. This may be used in for example truck trailers where a smaller frame height may be required at the side of the trailer facing the towing truck.

### SUMMARY

In view of the above, an object of the present disclosure is to provide an improved frame assembly for a vehicle which alleviates at least one of the drawbacks of the prior art, or which provides a suitable alternative.

According to a first aspect, the object is achieved by the subject matter in claim 1. According to a second aspect, the object is achieved by the subject matter in claim 15. Embodiments of the disclosure may be found in the dependent claims and in the accompanying description and drawings.

According to the first aspect thereof, the object is achieved by a load-bearing frame assembly for a vehicle, comprising a first and a second frame configured to receive and support material to be transported, the first and the second frame being successively arranged in a longitudinal extension of the frame assembly and mechanically coupled to each other at a connecting area. The first frame comprises at least one longitudinally extending load-bearing beam having an upper and a lower flange section interconnected by a web section. Further, a portion of the at least one load-bearing beam facing the second frame is split in the longitudinal extension along the web section, thereby forming an upper and a lower beam portion having respective upper and lower split web sections. The upper and lower beam portions diverge in a height extension of the frame assembly towards the second frame such that they form a space between each other, and the upper beam portion, the lower beam portion and the second frame are mechanically coupled by a reinforcement plate.

By the provision of the load-bearing frame assembly as disclosed in the above, an improved modular frame assembly is provided where the first and the second frame will have different respective heights. Hence, there will be a transition in height between the first frame and the second frame, and this is accomplished in an improved manner in that the load-bearing beam of the first frame has been split forming an upper and lower beam portion. Furthermore, the frame assembly has shown to be more cost-efficient to produce compared to prior art designs. Still further, the configuration of the frame assembly has also shown to provide high static and fatigue strength without increasing its weight. Thereby, the environmental impact may be reduced since a frame assembly having lower weight may e.g. result in a reduction in consumed energy for moving the vehicle in which the frame assembly may be implemented. The high strength/low weight characteristics are especially provided by the configuration of the load-bearing beam. In fact, by splitting the load-bearing beam of the first frame as described in the above, an improved connection interface is formed between the first and the second frame. More particularly, the space formed between the upper and lower beam portions enables a geometrically stable and strong connection. Still further, splitting the load-bearing beam has shown to be a cost-efficient way of providing the height transition between the first and the second frame.

Optionally, the first and the second frame may overlap each other at the connecting area. Thereby, further improved strength and stiffness may be provided. Still optionally, the overlap may be in the range of 10-100% of the longitudinal length of the space between the upper and lower beam portions of the load-bearing beam. For example, the range may be any one of the following: 10-90%, 10-80%, 10-70%, 10-60%, 10-50%, 10-40%, 20-90%, 30-90%, 10-80%, 20-80%, 30-80%, 10-70%, 20-70%, 30-70%, 20-60%, 30-60%.

Optionally, the reinforcement plate may be configured to interconnect the upper and lower split web sections, thereby forming an at least partly united web section therebetween, wherein preferably the reinforcement plate has a wedge-shaped profile as seen in a plane defined by the longitudinal extension and the height extension of the frame assembly. Thereby, by forming an at least partly united web section between the upper and lower beam portions, the beam's static and fatigue strength will be improved.

Optionally, the reinforcement plate may be mechanically coupled to the upper beam portion, the lower beam portion and the second frame by mechanical fastening means, such as bolts, rivets, screws, or the like.

Optionally, at least one of the upper and lower split web sections may comprise one or more apertures for receiving the mechanical fastening means. An aperture, also referred to as a hole, may be configured in different ways. For example, the at least one aperture may have an essentially circular cross section and it may be provided with or without internal threads. It shall be noted that the shape of the aperture is not limited to circular shapes, even though this may be preferred.

Optionally, the one or more apertures may be located adjacent to the space between the upper and lower beam portions.

Optionally, at least one of the upper and lower split web sections may comprise a longitudinally extending wave-formed edge facing the space between the upper and lower beam portions, wherein at least one of the one or more apertures may be located in a protruding portion of the wave-formed edge. Thereby, less material may be needed for providing the connection between the first frame, the reinforcement plate and the second frame. This in turn may lead to a further weight reduction of the frame assembly.

Optionally, the at least one load-bearing beam may be made of sheet metal.

Optionally, a cross sectional profile of the at least one load bearing beam may be z-formed. A z-formed beam has shown to facilitate the connection procedure of the first and second frame. More particularly, a z-formed shape has been found to provide improved access to the connection area, which is beneficial when fastening the mechanical fastening means, such as bolts, rivets, screws or the like.

Optionally, the lower beam portion may comprise a first distal section with respect to the second frame diverging from the upper beam portion in the height extension and towards the second frame by a first angle, and a second proximate section with respect to the second frame diverging from the upper beam portion in the height extension and towards the second frame by a second angle, wherein the second angle is larger than the first angle, such that a knee-portion is formed along the longitudinal extension of the lower beam portion. Thereby, a beneficial height transition between the first and second frame may be provided. For example, in the case the frame assembly is part of a trailer, there are certain requirements for how large the available space shall be at the connection interface between the towing truck and the trailer. Providing a knee-portion as in the above has been found to in a cost-efficient manner provide sufficient space at the connection area between the towing truck and the trailer. Preferably, according to some embodiments, the upper beam portion extends along a straight line, whereby the lower beam portion is bent downwardly.

Optionally, the at least one load bearing beam may be a first load-bearing beam, wherein the first frame further comprises a second longitudinally extending load-bearing beam being offset from the first load-bearing beam in a transverse direction of the frame assembly, wherein preferably the second load-bearing beam may be configured as the first load bearing beam. Still optionally, the first frame may comprise more than two load-bearing beams offset from each other in the transverse direction. In a similar manner, also the second frame may comprise a plurality of longitudinally extending beams arranged offset from each other in the transverse direction. Being arranged offset in the transverse direction means that a space/distance is present between the beams, but it may also mean that the beams are arranged adjacent to each other.

Optionally, the first and second load bearing beams may be mechanically coupled by one or more transverse beams, wherein preferably at least one of the one or more transverse beams may be located at the connecting area between the first and second frame. In a similar manner, if the first frame comprises more than two beams, transverse beams may mechanically couple the more than two beams together.

Optionally, the second frame may comprise at least an upper and a lower longitudinally extending load bearing beam, the upper load-bearing beam being connected to the first frame at the connecting area via the upper beam portion and the lower load-bearing beam being connected to the first frame at the connecting area via the lower beam portion.

Optionally, the frame assembly may be a chassis portion of a vehicle, preferably an unpowered vehicle such as trailer, dolly trailer, railway wagon or the like.

Optionally, the upper and lower beams of the second frame may be interconnected along the longitudinal extension via a lattice structure. The expression "lattice structure" as used herein means a framework or structure of crossed elements, preferably made by metal, such as steel. Still optionally, the upper and lower beams of the second frame may be interconnected along the longitudinal extension via a web section of the second frame. According to one example embodiment, the web section of the second frame may be an integral part with the reinforcement plate which is used for connecting the first and the second frame.

Optionally, the frame assembly may comprise an additional reinforcement member at the connecting area for connecting a transverse beam and/or at least one support leg of a trailer, preferably wherein the additional reinforcement member is a cast member.

Optionally, the frame assembly may comprise means for sealing at least a portion of a crevice provided between the reinforcement plate and at least one of the upper beam portion, the lower beam portion and the second frame. Thereby, risk of crevice corrosion may be mitigated.

According to the second aspect thereof, the object is achieved by the use of a longitudinally extending load-bearing beam in a first frame of a frame assembly for a vehicle. The frame assembly comprises the first frame and a second frame configured to receive and support material to be transported, the first and the second frame being successively arranged in a longitudinal extension of the frame assembly and mechanically coupled to each other at a connecting area. The load-bearing beam has an upper and a lower flange section interconnected by a web section and a portion of the at least one load-bearing beam adapted to face the second frame is split in the longitudinal extension along the web section, thereby forming an upper and a lower beam portion having respective upper and lower split web sections. The upper and lower beam portions diverge in a height extension such that they form a space between each other, and the upper beam portion and the lower beam portion are adapted to be mechanically coupled by a reinforcement plate to the second frame.

By using a load-bearing beam in a frame assembly as described in the above, a more cost-efficient frame assembly can be provided, which frame assembly also will have high strength and stiffness characteristics. It shall be noted that all embodiments of the first aspect of the disclosure may be applicable to all of the embodiments of the second aspect of the disclosure, and vice versa. Advantages provided by the second aspect of the disclosure are also analogous to the advantages provided by the first aspect of the invention.

### BRIEF DESCRIPTION OF THE DRAWINGS

With reference to the appended drawings, below follows a more detailed description of embodiments of the disclosure cited as examples.

In the drawings:
Fig. 1 depicts a perspective view of a load-bearing beam of a first frame of a frame assembly according to one example embodiment of the present disclosure;
Figs. 2a and 2b depict views from the side in the longitudinal extension of a load-bearing beam of a first frame of a frame assembly according to one example embodiment of the present disclosure;
Figs. 3a and 3b depict perspective views of a load bearing beam and a reinforcement plate being respectively disconnected and connected to the load-bearing beam according to one example embodiment of the present disclosure;
Fig. 4 depicts a view from a distal end, with respect to the second frame, of the load-bearing beam according to one example embodiment of the present disclosure;
Fig. 5 depicts a side view of a first example embodiment of a frame assembly according to the present disclosure;
Fig. 6 depicts a perspective view of a second example embodiment of a frame assembly according to the present disclosure;
Fig. 7 depicts a side view of a third example embodiment of a frame assembly according to the present disclosure; and
Figs. 8a and 8b depict a perspective view and a side view, respectively, of a trailer comprising a frame assembly according to an example embodiment of the present disclosure.

The drawings show diagrammatic exemplifying embodiments of the present disclosure and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

### DETAILED DESCRIPTION OF PREFERRED EMBODIMENTS

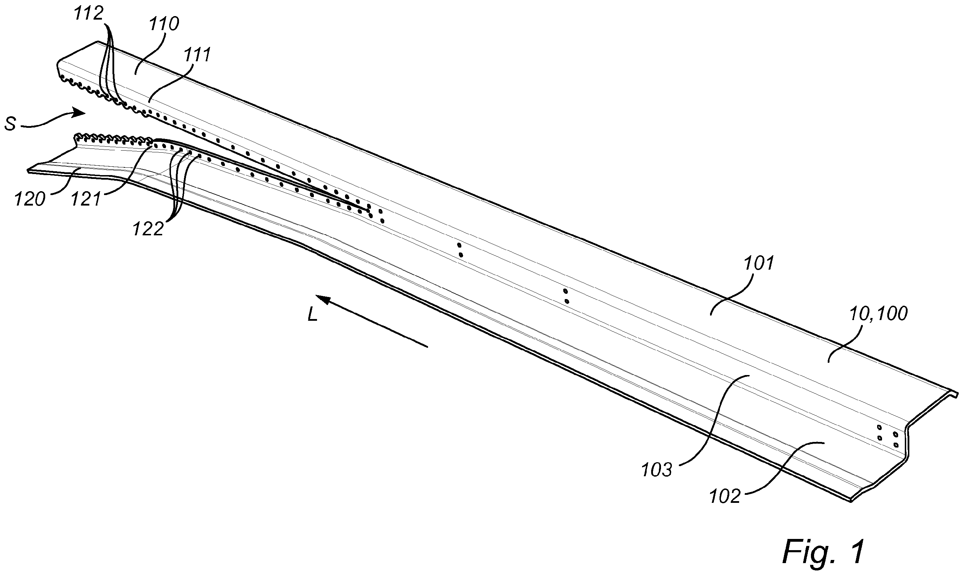

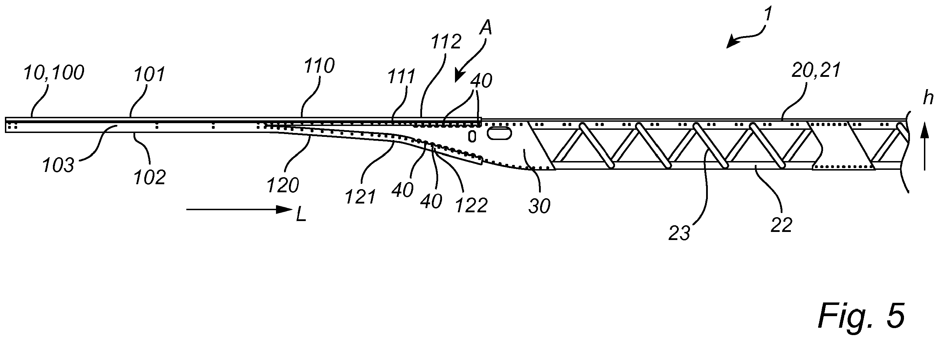

Fig. 1 shows a longitudinally extending load-bearing beam 100 of a first frame 10 of a frame assembly 1 (not shown in fig. 1). Example embodiments of frame assemblies 1 comprising a first 10 and a second 20 frame where the load-bearing beam 100 can be used is shown in figs. 5-8. The longitudinally extending load-bearing beam 100 has an upper 101 and a lower 102 flange section interconnected by a web section 103. Further, a portion of the at least one load-bearing beam 100 adapted to face the second frame 20 is split in the longitudinal extension L along the web section 103, thereby forming an upper and a lower beam portion, 110 and 120, respectively, which have respective upper and lower split web sections, 111 and 121, respectively. The upper and lower beam portions, 110 and 120, diverge in a height extension h of the frame assembly 1 and extend towards the second frame 20 such that they form a space S between each other. The upper beam portion 110 and the lower beam portion 120 are adapted to be mechanically coupled by a reinforcement plate 30 to the second frame 20. The load-bearing beam 100 is in this embodiment made by sheet metal and its cross section is z-shaped. The z-shape facilitates to get access to the space S during an assembly procedure of the frame assembly 1. Hence, the z-shape may enable to make use of less complicated tools during assembly, and/or the time needed for completing the assembly procedure may be reduced. Moreover, the z-shaped beam has also shown to provide high strength and stiffness properties.

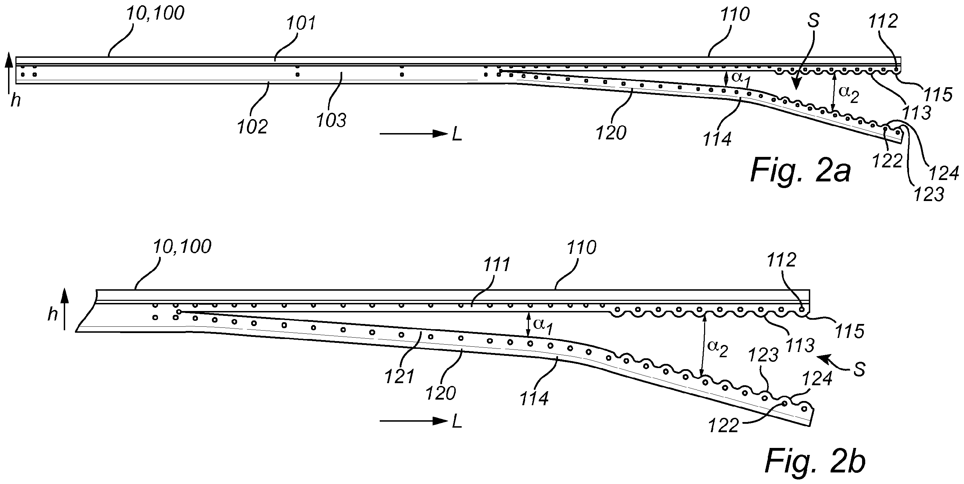

Fig. 2a shows a side view in the longitudinal extension L of a longitudinally extending load-bearing beam 100 of a first frame 10 of a frame assembly 1 (not shown) and fig. 2b shows an enlarged view of the split section with the space S as shown in fig 2a. The load-bearing beam 100 is here of similar configuration as the beam shown in fig. 1. However, the split section with the space S will here be described in more detail. The upper and lower split web sections, 111 and 121, respectively, comprise longitudinally extending wave-formed edges, 113 and 123, respectively, which face the space S between the upper and lower beam portions, 110 and 120. Several apertures, 112 and 122, are located in protruding portions, 115 and 124, of the respective wave-formed edges. The apertures, which preferably have a substantially circular cross-sectional shape, are adapted to receive bolts, screws, rivets or the like for providing a mechanical coupling to the second frame 20 (not shown). Further, a knee portion 114 is provided on the lower beam portion 120. The knee-portion is accomplished in that the lower beam portion 120 comprises a first distal section with respect to the second frame 20 which diverge from the upper beam portion 110 in the height extension h and the longitudinal extension L by a first angle α₁ and a second proximate section with respect to the second frame 20 which diverge from the upper beam portion 110 in the height extension h and the longitudinal extension L by a second angle α₂ being larger than the first angle α₁. Hence, the knee portion 14 is defined by an angle transition of the lower beam portion 120 in its longitudinal extension. The first angle α₁ may for example by any angle in the range of 1-30 degrees, and the second larger angle α₂ may for example by any angle in the range of 5-45 degrees. The upper beam portion 110 is here provided as a straight profile extending straight along the longitudinal extension L. Thereby a substantially flat surface can be provided on top of the frame assembly 1.

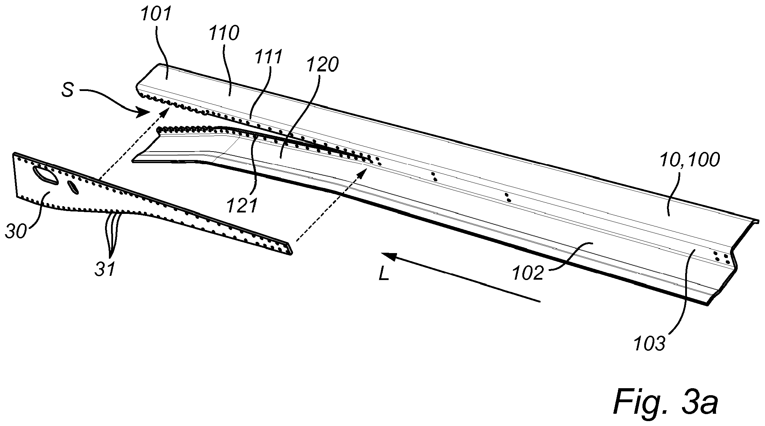

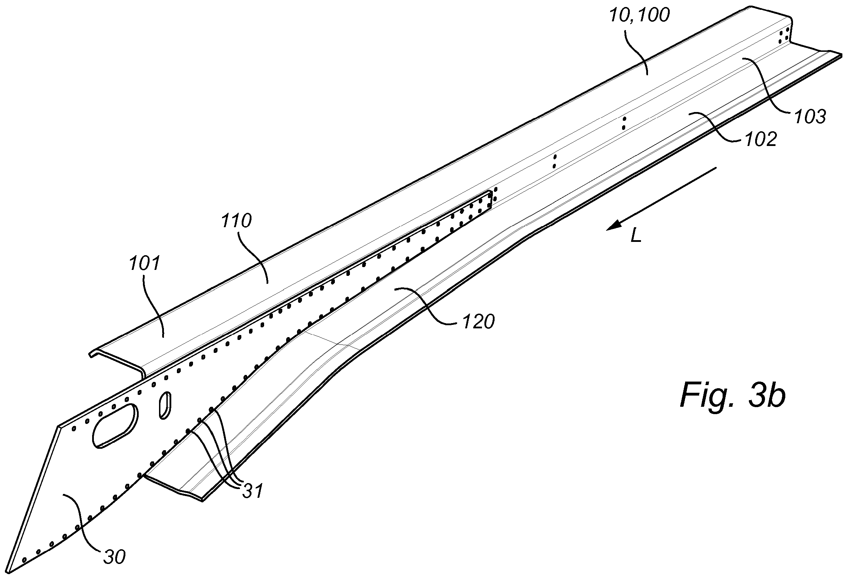

Figs. 3a and 3b show the load-bearing beam 100 of the first frame 10 as e.g. can also be seen in fig. 1. However, also the reinforcement plate 30 is shown in figs. 3a-b, either in a disconnected or in a connected state. The reinforcement plate 30 may preferably be a sheet metal reinforcement plate, and may further comprise apertures 31 for mechanical fastening means. As can be seen, the reinforcement plate 30 is intended to be coupled to the load-bearing beam 100 and positioned to at least partly cover the space S between the upper and the lower beam portions, 110 and 120. The reinforcement plate 30 has preferably a wedge-shaped profile as seen in the longitudinal and the height extension, L and h. Still preferably, the reinforcement plate 30 may be formed such that it forms an at least partly united web section between the upper and lower beam portions, 110 and 120. The united web section is shown in fig. 3b where it can be seen that the reinforcement plate 30 forms an enlarged web section between the upper and lower beam portions, 110 and 120. The reinforcement plate 30 may further be configured to also extend outside the load-bearing beam in the longitudinal extension towards the second frame 20 (not shown). Thereby an improved connection having high strength and/or stiffness can be provided. The apertures 31 are configured to align with the apertures, 112 and 122, of the load bearing beam 100 such that mechanical fastening means can be inserted into said apertures for providing the connection.

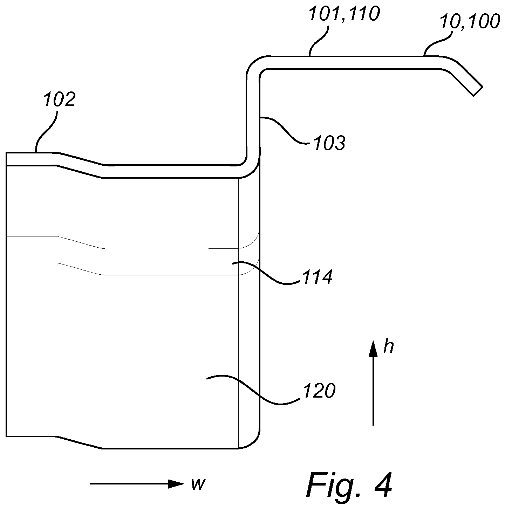

Now turning to fig. 4, the load bearing beam 100 is depicted in a view from an end portion of the beam which is distal to the second frame 20 and the space S. Here it can be more clearly seen that the beam 100 has a cross section with a z-shape. As can be seen, on the outer edge of the flange section 101, seen to the right in the figure, is a further bent section provided. In this embodiment, the bent section is bent downwardly. This configuration has been found to further increase the strength and bending stiffness of the beam 100. Further, by providing a bent section like this which is bent downwardly in the height direction h and which extends in the longitudinal extension L, a support surface may be formed. This support surface may e.g. be used for supporting transversely arranged beam elements, such as beam elements for a floor of a trailer. Thereby, a flat floor having beneficial strength and/or stiffness characteristics for accommodating goods in the trailer may be provided in a cost-efficient manner. In a similar manner, also the second flange section 102, on its outer edge thereof, and seen to the left in the figure, comprises a bent section. Here, the bent section of the second flange comprises two bends, one bent upwardly and another one bent downwardly with respect to the height direction h. This configuration has shown to further increase the load bearing beam's strength and/or stiffness characteristics.

Fig. 5 shows a side view along the longitudinal extension L of a frame assembly 1 according to an example embodiment of the present disclosure. The frame assembly 1 comprises a first frame 10 and a second frame 20 which are configured to receive and support material to be transported. The first and the second frame are successively arranged in the longitudinal extension L of the frame assembly and mechanically coupled to each other at a connecting area A. The first frame 10 comprises at least one longitudinally extending load-bearing beam 100 which has an upper 101 and a lower 102 flange section interconnected by a web section 103. A portion of the at least one load-bearing beam 100 which faces the second frame 20 is split in the longitudinal extension along the web section 103, thereby forming an upper and a lower beam portion, 110 and 120, respectively, which have respective upper and lower split web sections, 111 and 121, respectively. The upper and lower beam portions, 110 and 120, diverge in the height extension h of the frame assembly towards the second frame 20 such that they form a space S between each other. The upper beam portion 110, the lower beam portion 120 and the second frame 20 are mechanically coupled by a reinforcement plate 30. The reinforcement plate 30 interconnects the upper and lower beam portions such that a united web section is formed therebetween, thereby providing a high strength and a high stiffness connection at the connection area A. The reinforcement plate 30 has in this embodiment an at least partly wedge-shaped profile as seen in a plane defined by the longitudinal and the height extensions, L and h. Put it differently, the reinforcement plate 30 has one height at an end thereof proximate to the second frame 20, and another lower height at an opposite end thereof proximate to the first frame 10, and thereby the reinforcement plate obtains a tapering/wedge-shaped profile in its longitudinal extension. Further, according to some embodiments, the reinforcement plate 30 also extends a certain distance in the longitudinal direction L towards the second frame 20 such that it overlaps the second frame 20. Thereby, increased strength and/or stiffness may be provided.

As further shown in fig. 5, the reinforcement plate 30 is shaped such that it essentially follows the shape of the split space S between the upper and lower beam portions, 110 and 120. The second frame 20 is here comprising an upper and a lower longitudinally extending load bearing beams, 21 and 22, respectively. The upper load-bearing beam 21 is connected to the first frame 10 at the connecting area A via the upper beam portion 110 and the lower load-bearing beam 22 is connected to the first frame 10 at the connecting area A via the lower beam portion 120. The mechanical coupling is provided by bolts, rivets, screws, or the like in corresponding apertures, 112, 122 and 31, located on the split web sections 111 and 121, on the reinforcement plate 30 and on the upper and lower load-bearing beams, 21 and 22, of the second frame 20. The upper load-bearing beam 21 forms an essentially straight line with the upper flange section 101 of the load-bearing beam 100, and the lower load-bearing beam 22 forms a curved profile with the lower flange section 102 of the load-bearing beam 100. Hence, in this embodiment, the lower load-bearing beam 22 is bent upwardly in the height extension h towards the upper load-bearing beam 21 at the side of the second frame 20 which faces the first frame 10. Further, the upper load-bearing beam 21 overlaps the upper beam portion 110 by a certain distance, and likewise, the lower load-bearing beam 22 overlaps the lower beam portion 120 by a certain distance. The second frame 20 further comprises a lattice structure 23 which mechanically couples the upper and the lower load-bearing beams, 21 and 22. By the aforementioned configuration, a high strength and cost-efficient frame assembly 1 is formed which is especially suitable for truck trailers.

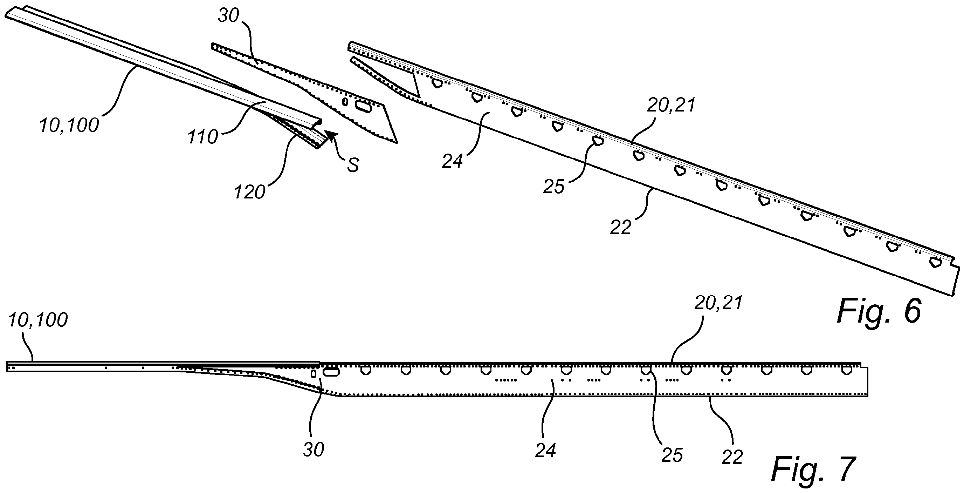

Alternative embodiments of a frame assembly 1 according to the present disclosure are shown in figs. 6 and 7. The first frame 10 and its load-bearing beam 100 is similarly configured as in the previous embodiment, and will therefore not be described in more detail with respect to these embodiments. The frame assembly 1 in fig. 6 is here shown in a dismounted state and differs from the previous embodiment by the configuration of the second frame 20, where the upper load-bearing beam 21 and the lower load bearing beam 22 are integrally formed via an intermediate web section 24. Preferably, the integrally formed element, comprising the upper and lower beams and the intermediate web section, 21, 22 and 24, is made of sheet metal. Still preferably, the integrally formed element may be made of one piece of sheet metal which has been cut and bent into its final shape, thereby forming the second frame 20, or at least a part of the second frame. The web section 24 of this embodiment comprises a plurality of openings 25 adapted to receive transverse beam elements (not shown) for the second frame 20. It has namely been found that providing openings for transverse beams in the web section may result in a more cost-efficient configuration. It shall however be understood that the integrally formed element does not necessarily need to comprise openings as described in the above, but could likewise be made without such openings. In addition, openings could also be provided and configured for other purposes. For example, openings could be provided in order to further reduce the weight of the integrally formed element. The web section 24, the upper and the lower beams 21 and 22, are further formed such that a space is provided for the reinforcement plate 30 at the end of the second frame 20 facing the first frame 10.

The frame assembly shown in fig. 7 shows yet another embodiment, where the second frame 20 comprises an upper beam element 21 and a lower beam element 22 which are mechanically coupled by an intermediate web section 24, wherein the web section 24 is here instead a separate part with respect to the beams. Hence, a web section is used instead of for example using a lattice structure between said beams, as mentioned in the above. The web section 24 of this embodiment comprises similar optional openings 35 as described in the above with respect to fig. 6. Further, in this particular embodiment, the reinforcement plate 30 is an integral part of the web section 24, even though the reinforcement plate 30 could also here be made as a separate part. The web section 24 is preferably mechanically coupled to the upper and lower beams by mechanical fastening means provided in apertures on the web section 24 and on the respective beams. Hence, this configuration may comprise fewer parts, which in turn may provide further cost benefits. Further, strength and/or stiffness properties may also be improved by this configuration.

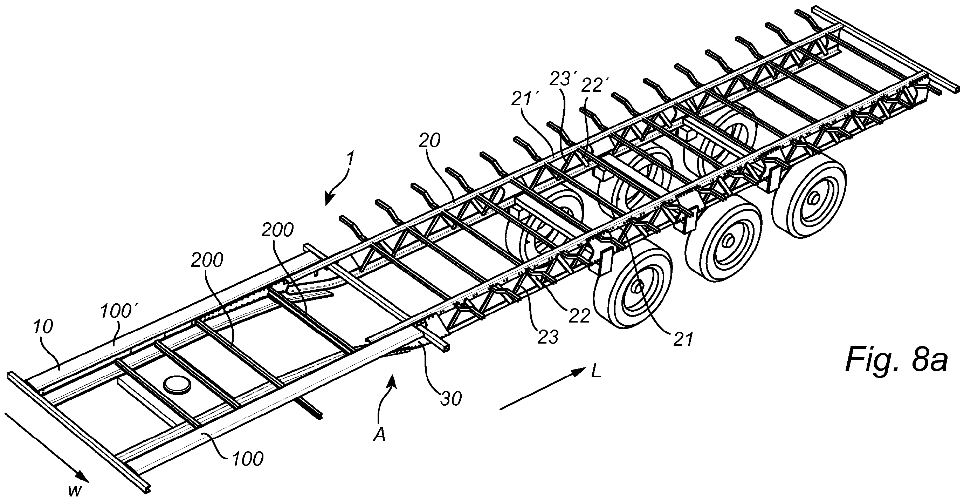

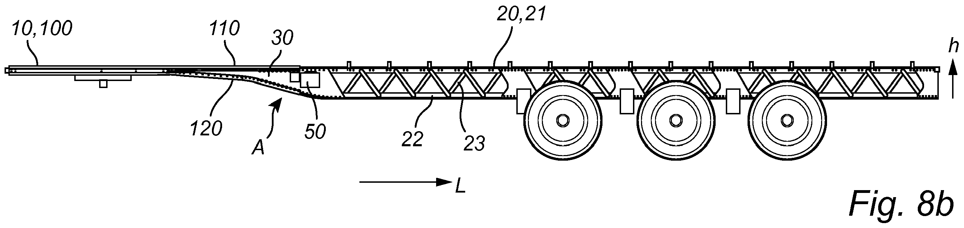

Figs. 8a and 8b show an embodiment of a trailer comprising a frame assembly 1 according to the present disclosure. The frame assembly of this embodiment comprises a first frame 10 with a first and a second load-bearing beam, 100 and 100', respectively, wherein the second load-bearing beam 100' is offset from the first load-bearing beam 100 in the transverse direction w of the frame assembly 1. The second load-bearing beam 100' is here configured in a similar manner as the first load bearing beam 100, even though it does not necessarily need to be similar. Moreover, the frame assembly 1 comprises a plurality of transverse load bearing beams 200 which mechanically couple the first load bearing beam 100 to the second load-bearing beam 100'. In this embodiment, one of the transverse load bearing beams 200 is placed at a position with respect to the longitudinal extension L where the split section with the space S begins, i.e. where the upper and lower beam portions 110 and 120 starts to diverge from each other. Another transverse load-bearing beam 200 is also located at, or nearby the knee-portion 14. It has been found that placing transverse beams at these specific locations will further improve strength and stiffness of the frame assembly 1 at the connecting area A. The second frame 20 comprises in a similar manner first upper and lower load-bearing beams, 21 and 22, respectively, and second upper and lower load-bearing beams, 21' and 22', respectively. Further, the second frame 20 also comprises a first and a second lattice structure, 23 and 23', respectively. Further, the first frame 10 is mechanically coupled to the second frame 20 via reinforcement plates 30 and 30'. As can be seen, the first frame 10 is located at a front portion of the trailer, which is meant to connect to a towing truck (not shown), and the second frame is located at a rear portion of the trailer. The trailer as shown in this embodiment comprises three wheel axles with three pairs of wheels. Of course, the frame assembly 1 is not limited to only this trailer configuration, but could also be advantageously used in other trailer configurations.

Further, fig 8b shows an additional reinforcement member 50 located at the connecting area A. In this embodiment, the member 50 is a cast member and is used for connecting support legs (not shown) to the trailer. The additional reinforcement member 50 may also be used for connecting other parts, such as transverse support beams between the first and the second load bearing beams, 100 and 100', and/or between the upper load bearing beams, 21 and 21', respectively, of the second frame 20.

It is to be understood that the present invention is not limited to the embodiments described above and illustrated in the drawings; rather, the skilled person will recognize that many changes and modifications may be made within the scope of the appended claims.

## Claims

1. A load-bearing frame assembly (1) for a vehicle, comprising,
- a first (10) and a second (20) frame configured to receive and support material to be transported, the first and the second frame being successively arranged in a longitudinal extension (L) of the frame assembly and mechanically coupled to each other at a connecting area (A),
wherein the first frame (10) comprises at least one longitudinally extending load-bearing beam (100) having an upper (101) and a lower (102) flange section interconnected by a web section (103),
**characterised in that**
- a portion of the at least one load-bearing beam (100) facing the second frame (20) is split in the longitudinal extension along the web section (103), thereby forming an upper and a lower beam portion (110, 120) having respective upper and lower split web sections (111, 121),
- the upper and lower beam portions (110, 120) diverging in a height extension (h) of the frame assembly towards the second frame (20) such that they form a space (S) between each other,
wherein
- the upper beam portion (110), the lower beam portion (120) and the second frame (20) are mechanically coupled by a reinforcement plate (30).

2. The frame assembly (1) according to claim 1, wherein the first (10) and the second frame (20) overlap each other at the connecting area (A).

3. The frame assembly (1) according to any one of the preceding claims, wherein the reinforcement plate (30) is configured to interconnect the upper and lower split web sections (111, 121), thereby forming an at least partly united web section therebetween, wherein preferably the reinforcement plate (30) has a wedge-shaped profile as seen in a plane defined by the longitudinal (L) and the height extension (h) of the frame assembly.

4. The frame assembly (1) according to any one of the preceding claims, wherein the reinforcement plate (30) is mechanically coupled to the upper beam portion (110), the lower beam portion (120) and the second frame (20) by mechanical fastening means (40), such as bolts, rivets, screws, or the like.

5. The frame assembly (1) according to claim 4, wherein at least one of the upper and lower split web sections (111, 121) comprises one or more apertures (112, 122) for receiving the mechanical fastening means (40).

6. The frame assembly (1) according to claim 5, wherein the one or more apertures (112, 122) are located adjacent to the space (S) between the upper and lower beam portions (110, 120).

7. The frame assembly according to claim 6, wherein at least one of the upper and lower split web sections (111, 121) comprises a longitudinally extending wave-formed edge (113, 123) facing the space (S) between the upper and lower beam portions (110, 120), wherein at least one of the one or more apertures (112, 122) are located in a protruding portion of the wave-formed edge (113, 123).

8. The frame assembly (1) according to any one of the preceding claims, wherein the at least one load-bearing beam (100) is made of sheet metal.

9. The frame assembly (1) according to any one of the preceding claims, wherein a cross sectional profile of the at least one load bearing beam (100) is z-formed.

10. The frame assembly (1) according to any one of the preceding claims, wherein the lower beam portion (120) comprises a first distal section with respect to the second frame (20) diverging from the upper beam portion (110) in the height extension (h) and towards the second frame (20) by a first angle (α1), and a second proximate section with respect to the second frame (20) diverging from the upper beam portion (110) in the height extension (h) and towards the second frame (20) by a second angle (α2), wherein the second angle (α2) is larger than the first angle (α1), such that a knee-portion (114) is formed along the longitudinal extension of the lower beam portion (110).

11. The frame assembly (1) according to any one of the preceding claims, wherein the at least one load bearing beam (100) is a first load-bearing beam, wherein the first frame (10) further comprises a second longitudinally extending load-bearing beam (100') being offset from the first load-bearing beam in a transverse direction (w) of the frame assembly, wherein preferably the second load-bearing beam (100') is configured as the first load bearing beam.

12. The frame assembly (1) according to claim 11, wherein the first and second load bearing beams (100, 100') are mechanically coupled by one or more transverse beams (200), wherein preferably at least one of the one or more transverse beams is located at the connecting area (A).

13. The frame assembly (1) according to any one of the preceding claims, the second frame (20) comprising at least an upper and a lower longitudinally extending load bearing beam (21, 22), the upper load-bearing beam (21) being connected to the first frame (10) at the connecting area (A) via the upper beam portion (110) and the lower load-bearing beam (22) being connected to the first frame (10) at the connecting area (A) via the lower beam portion (120).

14. The frame assembly (1) according to any one of the preceding claims, wherein the frame assembly is a chassis portion of a vehicle, preferably an unpowered vehicle such as trailer, dolly trailer, railway wagon or the like.

15. Use of a longitudinally extending load-bearing beam (100) in a first frame (10) of a frame assembly (100) for a vehicle, the frame assembly (100) comprising the first frame (10) and a second frame (20) configured to receive and support material to be transported, the first and the second frame being successively arranged in a longitudinal extension (L) of the frame assembly and mechanically coupled to each other at a connecting area (A),
- the load-bearing beam (100) having an upper (101) and a lower (102) flange section interconnected by a web section (103),
- a portion of the at least one load-bearing beam (100) adapted to face the second frame (20) being split in the longitudinal extension along the web section (103), thereby forming an upper and a lower beam portion (110, 120) having respective upper and lower split web sections (111, 121),
- the upper and lower beam portions (110, 120) diverging in a height extension (h) such that they form a space (S) between each other,
- the upper beam portion (110), the lower beam portion (120) being adapted to be mechanically coupled by a reinforcement plate (30) to the second frame (20).

## Patentansprüche

1. Lasttragendes Rahmengestell (1) für ein Fahrzeug, umfassend
- einen ersten (10) und einen zweiten (20) Rahmen, die konfiguriert sind, Material, das zu transportieren ist, aufzunehmen und zu stützen, wobei der erste und der zweite Rahmen jeweils aufeinanderfolgend in einer Längsausdehnung (L) des Rahmengestells angeordnet ist und diese an einem Verbindungsbereich (A) aneinander gekoppelt sind, wobei
- der erste Rahmen (10) mindestens einen sich längs ausdehnenden, lasttragenden Träger (100) umfasst, der einen oberen (101) und einen unteren (102) Flanschabschnitt aufweist, die durch einen Stegabschnitt (103) miteinander verbunden sind,
**dadurch gekennzeichnet, dass**
- ein Teil des mindestens einen lasttragenden Trägers (100), der dem zweiten Rahmen (20) gegenüberliegt, in der Längsausdehnung entlang dem Stegabschnitt (103) geteilt ist, wodurch ein oberer und ein unterer Trägerteil (110, 120) gebildet wird, die jeweils entsprechende obere und untere geteilte Stegabschnitte (111, 121) aufweisen,
- die oberen und unteren Trägerteile (110, 120) untereinander in einer Höhenausdehnung (h) des Rahmengestells zu dem zweiten Rahmen (20) hin derart auseinanderlaufen, sodass diese einen Raum (S) zwischen einander bilden, wobei
- der obere Trägerteil (110), der untere Trägerteil (120) und der zweite Rahmen (20) durch eine Verstärkungsplatte (30) mechanisch aneinander gekoppelt sind.

2. Rahmengestell (1) nach Anspruch 1, wobei sich der erste (10) und der zweite Rahmen (20) an dem Verbindungsbereich (A) gegenseitig überlappen.

3. Rahmengestell (1) nach einem der vorstehenden Ansprüche, wobei die Verstärkungsplatte (30) konfiguriert ist, die oberen und unteren geteilten Stegabschnitte (111, 121) miteinander zu verbinden, wodurch dazwischen mindestens teilweise ein verbundener Stegabschnitt gebildet wird, wobei die Verstärkungsplatte (30) bevorzugt ein keilförmiges Profil in der Blickebene aufweist, das durch die Längs- (L) und die Höhenausdehnung (h) des Rahmengestells definiert ist.

4. Rahmengestell (1) nach einem der vorstehenden Ansprüche, wobei die Verstärkungsplatte (30) an den oberen Trägerteil (110), den unteren Trägerteil (120) und den zweiten Rahmen (20) durch mechanische Befestigungsmittel (40), wie beispielsweise Bolzen, Nieten, Schrauben oder dergleichen, mechanisch gekoppelt sind.

5. Rahmengestell (1) nach Anspruch 4, wobei mindestens einer der oberen und unteren geteilten Stegabschnitte (111, 121) eine oder mehrere Öffnungen (112, 122) zum Aufnehmen der mechanischen Befestigungsmittel (40) umfasst.

6. Rahmengestell (1) nach Anspruch 5, wobei sich die eine oder mehreren Öffnungen (112, 122) benachbart dem Raum (S) zwischen den oberen und unteren Trägerteilen (110, 120) befinden.

7. Rahmengestell nach Anspruch 6, wobei mindestens einer der oberen und unteren geteilten Stegabschnitte (111, 121) eine sich längs ausdehnende, wellenförmige Kante (113, 123) umfasst, die dem Raum (S) zwischen den oberen und unteren Trägerteilen (110, 120) gegenüberliegt, wobei sich die mindestens eine der einen oder mehreren Öffnungen (112, 122) in einem hervorstehenden Abschnitt der wellenförmigen Kante (113, 123) befindet.

8. Rahmengestell (1) nach einem der vorstehenden Ansprüche, wobei der mindestens eine lasttragende Träger (100) aus Blech hergestellt ist.

9. Rahmengestell (1) nach einem der vorstehenden Ansprüche, wobei ein Querschnittsprofil des mindestens einen lasttragenden Trägers (100) Z-förmig ist.

10. Rahmengestell (1) nach einem der vorstehenden Ansprüche, wobei der untere Trägerteil (120) einen ersten, bezüglich des zweiten Rahmens (20) fern gelegenen Abschnitt umfasst, der von dem oberen Trägerteil (110) in der Höhenausdehnung (h) und zu dem zweiten Rahmen (20) hin um einen ersten Winkel (α1) auseinanderlaufend ist, und einen zweiten, bezüglich des zweiten Rahmens (20) benachbart gelegenen Abschnitt, der von dem oberen Trägerteil (110) in der Höhenausdehnung (h) und zu dem zweiten Rahmen (20) hin um einen zweiten Winkel (a2) auseinanderlaufend ist, wobei der zweite Winkel (α2) größer als der erste Winkel (α1) ist, sodass eine Knickstelle (114) entlang der Längsausdehnung des unteren Trägerteils (110) gebildet ist.

11. Rahmengestell (1) nach einem der vorstehenden Ansprüche, wobei der mindestens eine lasttragende Träger (100) ein erster lasttragender Träger ist, wobei der erste Rahmen (10) weiter einen zweiten, sich längs ausdehnenden lasttragenden Träger (100') umfasst, der von dem ersten lasttragenden Träger in einer querverlaufenden Richtung (w) des Rahmengestells versetzt ist, wobei der zweite lasttragende Träger (100') bevorzugt als der erste lasttragende Träger konfiguriert ist.

12. Rahmengestell (1) nach Anspruch 11, wobei die ersten und zweiten lasttragenden Träger (100, 100') durch einen oder mehrere querverlaufende Träger (200) mechanisch aneinander gekoppelt sind, wobei sich der mindestens eine des einen oder der mehreren querverlaufenden Träger bevorzugt an dem Verbindungsbereich (A) befindet.

13. Rahmengestell (1) nach einem der vorstehenden Ansprüche, wobei der zweite Rahmen (20) mindestens einen oberen und einen unteren, sich längs ausdehnenden lasttragenden Träger (21, 22) umfasst, wobei der obere lasttragende Träger (21) mit dem ersten Rahmen (10) an dem Verbindungsbereich (A) über den oberen Trägerteil (110) verbunden ist und der untere lasttragende Träger (22) mit dem ersten Rahmen (10) an dem Verbindungsbereich (A) über den unteren Trägerteil (120) verbunden ist.

14. Rahmengestell (1) nach einem der vorstehenden Ansprüche, wobei das Rahmengestell ein Fahrgestellteil eines Fahrzeugs ist, bevorzugt eines Fahrzeugs ohne Antrieb, wie z. B. ein Anhänger, Sattelkupplungsanhänger, Eisenbahn-Güterwagen oder dergleichen.

15. Verwendung eines sich längs ausdehnenden lasttragenden Trägers (100) in einem ersten Rahmen (10) eines Rahmengestells (100) für ein Fahrzeug, wobei das Rahmengestell (100) den ersten Rahmen (10) und einen zweiten Rahmen (20) umfasst, die konfiguriert sind, Material, das zu transportieren ist, aufzunehmen und zu stützen, wobei der erste und der zweite Rahmen jeweils aufeinanderfolgend in einer Längsausdehnung (L) des Rahmengestells angeordnet ist und diese an einem Verbindungsbereich (A) aneinander gekoppelt sind,
- wobei der lasttragende Träger (100) einen oberen (101) und einen unteren (102) Flanschabschnitt aufweist, die durch einen Stegabschnitt (103) miteinander verbunden sind,
- ein Teil des mindestens einen lasttragenden Trägers (100) angepasst ist, um dem zweiten Rahmen (20) gegenüberzuliegen, der in der Längsausdehnung entlang des Stegabschnitts (103) geteilt ist, wodurch ein oberer und ein unterer Trägerteil (110, 120) gebildet ist, die entsprechende obere und untere geteilte Stegabschnitte (111, 121) aufweisen,
- die oberen und unteren Trägerteile (110, 120) in einer Höhenausdehnung (h) derart auseinanderlaufen, sodass diese einen Raum (S) zwischen einander bilden,
- der obere Trägerteil (110), der untere Trägerteil (120) angepasst sind, um durch eine Verstärkungsplatte (30) an den zweiten Rahmen (20) mechanisch gekoppelt zu werden.

## Revendications

1. Ensemble cadre de support de charge (1) pour un véhicule, comprenant :
- un premier (10) et un second (20) cadre configurés pour recevoir et supporter un matériau à transporter, le premier et le second cadre étant agencés successivement dans une extension longitudinale (L) de l'ensemble cadre et couplés mécaniquement l'un à l'autre au niveau d'un point de raccordement (A),
dans lequel le premier cadre (10) comprend au moins une poutre de support de charge s'étendant longitudinalement (100) présentant une section de bride supérieure (101) et une section de bride inférieure (102) reliées par une section de tissu (103),
**caractérisé en ce que**
- une partie de la au moins une poutre de support de charge (100) faisant face au second cadre (20) est divisée dans l'extension longitudinale le long de la section de tissu (103), ce qui permet de former une partie de poutre supérieure et une partie de poutre inférieure (110, 120) présentant des sections de tissu divisées supérieure et inférieure respectives (111, 121),
- les parties de poutre supérieure et inférieure (110, 120) divergent dans une extension de hauteur (h) de l'ensemble cadre vers le second cadre (20) de telle sorte qu'elles forment un espace (S) entre elles,
dans lequel
- la partie de poutre supérieure (110), la partie de poutre inférieure (120) et le second cadre (20) sont couplés mécaniquement par une plaque de renfort (30).

2. Ensemble cadre (1) selon la revendication 1, dans lequel le premier (10) et le second cadre (20) se chevauchent au niveau du point de raccordement (A).

3. Ensemble cadre (1) selon l'une quelconque des revendications précédentes, dans lequel la plaque de renfort (30) est configurée pour relier les sections de tissu divisées supérieure et inférieure (111, 121), ce qui permet de former une section de tissu au moins partiellement unifiée entre elles, dans lequel, de préférence, la plaque de renfort (30) présente un profil cunéiforme comme vu dans un plan défini par l'extension longitudinale (L) et l'extension de hauteur (h) de l'ensemble cadre.

4. Ensemble cadre (1) selon l'une quelconque des revendications précédentes, dans lequel la plaque de renfort (30) est couplée mécaniquement à la partie de poutre supérieure (110), à la partie de poutre inférieure (120) et au second cadre (20) par des moyens de fixation mécanique (40), tels que des boulons, des rivets, des vis ou analogues.

5. Ensemble cadre (1) selon la revendication 4, dans lequel au moins l'une des sections de tissu divisées supérieure et inférieure (111, 121) comprend un ou plusieurs orifices (112, 122) pour recevoir les moyens de fixation mécanique (40).

6. Ensemble cadre (1) selon la revendication 5, dans lequel le ou les orifices (112, 122) sont situés à proximité de l'espace (S) entre les parties de poutre supérieure et inférieure (110, 120).

7. Ensemble cadre (1) selon la revendication 6, dans lequel au moins l'une des sections de tissu divisées supérieure et inférieure (111, 121) comprend un bord en forme de vague s'étendant longitudinalement (113, 123) faisant face à l'espace (S) entre les parties de poutre supérieure et inférieure (110, 120), dans lequel l'orifice ou au moins l'un des orifices (112, 122) est situé dans une partie en saillie du bord en forme de vague (113, 123).

8. Ensemble cadre (1) selon l'une quelconque des revendications précédentes, dans lequel la au moins une poutre de support de charge (100) est composée d'une tôle.

9. Ensemble cadre (1) selon l'une quelconque des revendications précédentes, dans lequel un profil de section transversale de la au moins une poutre de support de charge (100) est en forme de z.

10. Ensemble cadre (1) selon l'une quelconque des revendications précédentes, dans lequel la partie de poutre inférieure (120) comprend une première section distale par rapport au second cadre (20) divergeant à partir de la partie de poutre supérieure (110) dans l'extension de hauteur (h) et vers le second cadre (20) d'un premier angle (al) et une seconde section proximale par rapport au second cadre (20) divergeant à partir de la partie de poutre supérieure (110) dans l'extension de hauteur (h) et vers le second cadre (20) d'un second angle (α2), dans lequel le second angle (a2) est plus grand que le premier angle (al) de telle sorte qu'une partie de rotule (114) soit formée le long de l'extension longitudinale de la partie de poutre inférieure (110).

11. Ensemble cadre (1) selon l'une quelconque des revendications précédentes, dans lequel la au moins une poutre de support de charge (100) est une première poutre de support de charge, dans lequel le premier cadre (10) comprend en outre une seconde poutre de support de charge s'étendant longitudinalement (100') qui est décalée par rapport à la première poutre de support de charge dans une direction transversale (w) de l'ensemble cadre, dans lequel, de préférence, la seconde poutre de support de charge (100') est configurée comme la première poutre de support de charge.

12. Ensemble cadre (1) selon la revendication 11, dans lequel les première et seconde poutres de support de charge (100, 100') sont couplées mécaniquement par une ou plusieurs poutres transversales (200), dans lequel, de préférence, la poutre transversale ou au moins l'une des poutres transversales est située au niveau de la zone de raccordement (A).

13. Ensemble cadre (1) selon l'une quelconque des revendications précédentes, dans lequel le second cadre (20) comprend au moins une poutre de support de charge supérieure et une poutre de support de charge inférieure s'étendant longitudinalement (21, 22), la poutre de support de charge supérieure (21) étant reliée au premier cadre (10) au niveau de la zone de raccordement (A) par le biais de la partie de poutre supérieure (110) et la poutre de support de charge inférieure (22) étant reliée au premier cadre (10) au niveau de la zone de raccordement (A) par le biais de la partie de poutre inférieure (120).

14. Ensemble cadre (1) selon l'une quelconque des revendications précédentes, dans lequel l'ensemble cadre est une partie de châssis d'un véhicule, de préférence un véhicule non motorisé tel qu'une remorque, une remorque de chariot, un wagon de chemin de fer ou analogue.

15. Utilisation d'une poutre de support de charge s'étendant longitudinalement (100) dans un premier cadre (10) d'un ensemble cadre (100) pour un véhicule, l'ensemble cadre (100) comprenant le premier cadre (10) et un second cadre (20) configurés pour recevoir et supporter un matériau à transporter, le premier et le second cadre étant agencés successivement dans une extension longitudinale (L) de l'ensemble cadre et couplés mécaniquement l'un à l'autre au niveau d'un point de raccordement (A),
- la poutre de support de charge (100) présentant une section de bride supérieure (101) et une section de bride inférieure (102) reliées par une section de tissu (103),
- une partie de la au moins une poutre de support de charge (100) conçue pour faire face au second cadre (20) étant divisée dans l'extension longitudinale le long de la section de tissu (103), ce qui permet de former une partie de poutre supérieure et une partie de poutre inférieure (110, 120) présentant des sections de tissu divisées supérieure et inférieure respectives (111, 121),
- les parties de poutre supérieure et inférieure (110, 120) divergent dans une extension de hauteur (h) de telle sorte qu'elles forment un espace (S) entre elles,
- la partie de poutre supérieure (110), la partie de poutre inférieure (120) étant conçues pour être couplées mécaniquement par une plaque de renfort (30) au second cadre (20).
